# EUROPÄISCHE PATENTSCHRIFT

(11) **EP 1 183 216 B1**
(45) Veröffentlichungstag und Bekanntmachung des Hinweises auf die Patenterteilung: **21.04.2004**
(21) Anmeldenummer: 00905070.9
(22) Anmeldetag: 18.02.2000
(51) Int. Cl.: C04B 11/032, C04B 11/26

(54) **VERFAHREN UND ANORDNUNG ZUR HERSTELLUNG VON ALPHA-CALCIUMSULFAT-HALBHYDRAT UNTER VERWENDUNG DER BEI DER NASSEN RAUCHGASENTSCHWEFELUNG (REA) EINES FOSS**
METHOD AND ARRANGEMENT FOR PRODUCING $g(a)-CALCIUM SULPHATE HEMIHYDRATE USING THE GYPSUM SUSPENSION PRODUCED DURING THE WET FLUE GAS DESULPHURIZATION OF A FOSSIL-FIRED THERMAL POWER STATION
PROCEDE ET DISPOSITIF POUR LA PRODUCTION D'$g(a)-SULFATE DE CALCIUM-SEMIHYDRATE AU MOYEN DE LA SUSPENSION DE GYPSE PRODUITE LORS DE LA DESULFURATION DE GAZ DE FUMEES PAR VOIE HUMIDE DANS UNE CENTRALE THERMIQUE A COMBUSTIBLE FOSSILE

(30) Priorität: 19.02.1999 DE 19908776
(43) Veröffentlichungstag der Anmeldung: 06.03.2002
(73) Patentinhaber: Vattenfall Europe Generation AG & Co. KG, 10115 Berlin (DE); Dentona AG, 44149 Dortmund (DE)
(72) Erfinder: HOHMANN, Wolfgang, D-12249 Berlin (DE)
(86) Internationale Anmeldenummer: PCT/EP2000/001308
(87) Internationale Veröffentlichungsnummer: WO 2000/048958

(56) Entgegenhaltungen:
- DE-A- 3 634 207
- FR-A- 2 330 449

## Beschreibung

Die Erfindung betrifft ein Verfahren und eine Anordnung zur Herstellung von α-Calciumsulfat-Halbhydrat unter Verwendung der bei der nassen Rauchgasentschwefelung (REA) eines fossil gefeuerten Wärmekraftwerkes anfallenden Gipssuspension.

Es gibt verschiedene Verfahren für die Umwandlung von Chemie- bzw. REA-Gips zu α-Halbhydrat. Alle bisherigen Verfahren arbeiten entweder diskontinuierlich und lassen sich daher in der Regel nicht an den kontinuierlichen Prozess einer REA anbinden, oder die Verfahren liefern kein reines α-Hatbhydrat, sondern Mischungen mit Doppelhydrat bzw. Anhydrid III (AIII).

Es sind drei grundsätzlich unterschiedliche Verfahrenstypen zur Umwandlung von Chemie- bzw. REA-Gips zu α-Halbhydrat bekannt:
a) Verfahren, die mit wässrigen Gipssuspensionen in einem Autoklaven bei 105 bis 165 °C und einem dem entsprechenden Überdruck von 1 bis 6 bar arbeiten.
b) Drucklose Verfahren, bei denen eine Gipssuspension in Schwefelsäure oder in Mischungen von Schwefelsäure mit anderen Säuren bei Temperaturen unter 105 °C umgewandelt wird.
c) Quasi-trockene Verfahren, bei denen entwässerter Gips mit einer Restfeuchte unter 20 % in Autoklaven bei 105 bis 165 °C und den entsprechenden Überdrücken von 1 bis 6 bar umgewandelt wird.

Die Verfahren gemäß "a" **(Eichner/Kappert, Zahnärztliche Werkstoffe, Hüthig-Verlag 1996, 6. Auflage, Band 1, Seiten 9 - 10)** wurden ursprünglich von Giulini entwickelt und später nach Ablauf der Schutzrechte von anderen übernommen und teilweise weiterentwickelt, wie z. B. Knauf (Nitto). Diese Verfahren arbeiten mit senkrecht stehenden Autoklaven und innenliegenden Rührwerken vorzugsweise bei 135 °C und einem entsprechenden Druck von 2,2 bar.

Zur Herstellung von reinem α-Halbhydrat arbeitet das Verfahren diskontinuierlich.

Die Verfahren gemäß "b" existieren in der Patentliteratur in einer großen Zahl von Variationen **(DE 31 29 878 A1, DE 31 39 384 A1, DE 32 47 933 A1, DE 33 31 838 A1, DE 35 22 495 A1, DE 35 34 390 A1, DE 36 25 186 A1)**. Alle arbeiten in Schwefelsäure oder schwefelsäurehaltigen Mischungen mit anderen Säuren, vorzugsweise Phosphorsäure. Die Schwefelsäure senkt dabei offensichtlich durch Wasserentzug die Umwandlungstemperatur von Doppelhydrat zu α-Halbhydrat.
Es kann daher drucklos unterhalb der Siedetemperatur der Säure bzw. Säuremischung bei etwa 105 °C gearbeitet werden. Unter Einfluss der stark entwässernden Schwefelsäure entsteht jedoch kein reines α-Halbhydrat, sondern die Entwässerung läuft kontinuierlich weiter bis zum Anhydrid (A III). Anhydrid III ist kristallgraphisch identisch mit vollständig entwässertem Subhydrat (α-Halbhydrat = Subhydrat mit 0,5 mol H₂O). Es entstehen so je nach Verfahrensvariation Umwandlungsprodukte mit 30, teilweise bis zu 40 % Anhydrid.

Als weiterer Nachteil dieser Verfahren muss gesehen werden, dass die mit dem Umwandlungsprodukt ausgeschleppten Säuren ausgewaschen und neutralisiert werden müssen. Außerdem ist eine ständige Aufkonzentration der Säuren erforderlich, weil das bei der Umwandlung frei werdende Kristallwasser zu laufender Verdünnung führt.

Hier sei beispielsweise auf DE 36 34 207 A1 verwiesen, worin ein Verfahren zur Herstellung von α-Calciumsulfat-Halbhydrat beschrieben wird, bei dem eine drucklose Erhitzung stattfindet.

Großtechnisch werden derartige Verfahren, soweit bekannt, bisher noch nicht angewandt. Unbekannt ist daher auch, ob sie kontinuierlich arbeiten können.

Die Verfahren gemäß "c" werden in der Patentliteratur ebenfalls in verschiedenen Varianten beschrieben **(DE 37 11 367 A1, DE 38 00 794 C2, DE 38 19 652 A1)**. Technisch mehrfach angewandt wird das Verfahren von Pro-Mineral/SICOWA. Dabei wird entwässertes Doppelhydrat mit einer adsorbierten Restfeuchte von weniger als 20 % brikettiert.

Das Einbringen von Kristallisatoren ist problematisch. Das entstehende Korn ist vorzugsweise dendritisch und stark verfilzt, so daß ein Mahlprozeß notwendig wird. Das Verfahren ist mit relativ hohen Energiekosten belastet, weil vor der Trocknung keine Entwässerung möglich ist.
Das gesamte in den Formkörpern enthaltene Wasser muß unter Zuführung entsprechend hoher Verdampfungswärmemenge entfernt werden.

Eine Abwandlung dieses Verfahrens wurde von RWK (Rheinisch-Westfälische Kalkwerke AG) patentiert (DE 38 00 794 C2), ist aber offensichtlich noch nie großtechnisch angewendet worden. Anstelle von brikettierten Fremdkörpern wird hierbei der Gips in durchlöcherte Großbehälter eingefüllt und so zum Umwandeln in liegende Autoklaven gefahren.

Die Verfahren gemäß "c" haben gegenüber den Verfahren gemäß "a" den Vorteil, daß nur geringe Wassermengen auf Reaktionstemperatur gebracht werden müssen. Die Gesamtenergiebilanz ist jedoch ungünstig, weil die Wärmeverluste mit dem Abwasser aus der Entwässerung geringer sind als der Verdampfungswärmemehrbedarf bei nicht entwässerbarem Halbhydratbriketts.

Mit den Quasi-trockenen Verfahren ist es zwar technisch möglich, ein reines α-Halbhydrat herzustellen, es hat jedoch aufgrund seiner Entstehungsbedingungen eine ausgesprochen minderwertige Kornstruktur. Dieses liegt einerseits daran, daß es ohne Suspension fast unmöglich ist, kristallisationssteuernde Substanzen gleichmäßig zu dosieren, andererseits entsteht bei der Umkristallisation ohne ausreichende Wassermenge kein globulitisches, sondern ein stark filziges Subhydratkorn. Derartige Qualitäten sind nur in der Baustoffindustrie verwertbar.

Eine rohrförmige Reaktorbatterie wird bereits in DE-OS 35 22 496 beschrieben. Dieser Reaktor ist jedoch 600 - 800 m lang und besteht aus Glasröhren. Diese Kombination ist offensichtlich nötig, um zu verhindern, daß das Rohrsystem durch Verkrustung mit dem sich in der Suspension bildenden Subhydrat zuwächst, wie es auf der Innenfläche langer Metallrohre der Fall wäre. Die erfindungsgemäße Anordnung vermeidet diese Verkrustungen dadurch, daß in allen Rohren des Reaktors auf voller Länge rotierende Mischschnecken vorhanden sind. Ihre Drehzahl ist einzeln regelbar und kann daher sowohl der sich durch den Umkristallisationsvorgang ändernden Viskosität angepaßt werden als auch Einfluß auf die Keimwachstumsbedingungen nehmen.

Das so aufbereitete Material ist stapelbar, wird in liegende Autoklaven gefahren und dort unter Sattdampf bei ca. 135 °C und entsprechend 2,2 bar Überdruck umgewandelt. Dieses Verfahren erlaubt den Durchsatz großer Mengen und wird mehrfach bei REA-Gips-Umwandlung angewendet. Die erzielbaren Qualitäten sind mäßig und nur für Baustoffe akzeptabel. Die in den brikettierten Formkörpern eingeschlossene Wassermenge reicht für eine zügige Lösung des Doppelhydrates und Auskristallisation des Halbhydrats nicht aus.

In DE-OS 32 39 669 ist ein 42 bzw. 56 m langer Rohrreaktor beschrieben. Er weist keine innenliegenden Bauteile auf und ist wegen seiner wendelförmigen Gestalt dafür auch ungeeignet. Die Gipsumwandlung erfolgt auch nicht im Durchlauf, sondern während eines mehrfachen Umlaufes, wobei ständig frische Doppelhydratsuspension zugeführt und gleichzeitig ein Teilstrom ausgeschleust wird.
Die Ausbeute an α-Halbhydrat liegt bei nur 80 %. Auch hiergegen ist somit das erfindungsgemäße Verfahren eindeutig abgrenzbar.

Andererseits ist unter DE-OS 35 36 321 ein Autoklav-Verfahren mit einem stehenden mehr als 20 m hohen Reaktor beschrieben. Aufgrund dieser Bauhöhe entsteht zumindest im unteren Reaktorbereich ein hydrostatischer Druck, der Temperaturen bis etwa 135 °C ohne Siedebeginn erlaubt. Gegenüber der erfindungsgemäßen Anordnung handelt es sich hierbei jedoch nicht um einen Rohrreaktor, sondern um ein konventionelles Reaktorgefäß besonderer Bauhöhe. Außerdem liegt bei der erfindungsgemäßen Anordnung der rohrförmige Reaktor waagerecht, so daß er auf voller Länge unter hydrostatischem Druck steht. Senkrecht sind vielmehr nur die Wärmetauscher angeordnet. Sie erzeugen damit den hydrostatischen Druck und ermöglichen die drucklose Zuführung und Entnahme der Suspensionen.

Fast alle bisherigen Verfahren müssen separat zum Kraftwerksprozeß in räumlicher Trennung betrieben werden, was erhöhte Energie und Transportkosten verursacht. Vor allem wird aber auf Möglichkeiten zur direkten Reinigung des REA-Gipses verzichtet.

Der Erfindung liegt die Aufgabe zugrunde, mit unmittelbarer Anbindung an den REA-Prozeß eines Kohlekraftwerkes eine kontinuierlich arbeitende Gipsumwandlung und ―weiterverarbeitung zu hochreinen Endprodukten durchzuführen.

Dies wird dadurch erreicht, daß erfindungsgemäß der aus der REA entnommenen Gipssuspension vor ihrer Entwässerung ein Teilstrom entnommen, über einen oder mehrere Hydrozyklone die Trennung der Feststoffanteile in Dihydrat und unerwünschte Bestandteile durchgeführt, die so gereinigte Suspension erwärmt, anschließend mit einer Dispersion aus Kristallisatoren und Keimbildnern vermischt, über das äußere Rohr eines länglichen, aufrechtstehenden Doppelrohrwärmetauschers geführt sowie nach einer weiteren Erwärmung einem darunter befindlichen ggf. schlangenförmigen, Mischschnecken aufweisenden Reaktor unter Ausnutzung des hydrostatischen Druckes aufgegeben und nachfolgend dem inneren Rohr des Doppelrohrwärmetauschers zugeführt wird, wobei nunmehr die entstandene α-Calciumsulfat-Halbhydrat-Suspension in diesem Innenrohr zum Aufsteigen auf die Ausgangsebene gebracht und nachfolgend entwässert sowie das entstehende Pulver getrocknet und gesiebt oder gemahlen wird.

Die Trennung der Feststoffanteile wird in derart durchgeführt, daß über den Zyklonunterlauf nur mittel- bis grobkörniges Dihydrat und über den Zyklonenoberlauf unerwünschte feine Feststoffteilchen sowie feinkörniges Dihydrat ausgeschleust werden. Der Zyklonenoberlauf wird in die dem REA-Kreislauf nachgeschaltete Entwässerungseinrichtung oder den REA-Sumpf rückgeführt. Die Vor-Erwärmung der gereinigten Suspension erfolgt über eine Nutzung des dem Rücklaufwasser des Bandfilters (bei ca. 90 - 95 °C) innewohnenden Wärmeinhaltes.

Die zum Verfahren gehörende Anordnung ist so ausgeführt, daß aus der Verbindungsleitung zwischen einem der REA nachgeschalteten Hydrozyklon und einer Entwässerungseinrichtung oder direkt aus dem REA-Sumpf eine mit einem oder mehreren Hydrozyklonen verbundene Abzweigleitung angebunden ist, wobei der Oberlauf des Hydrozyklons und/oder der Hydrozyklone über eine Pumpe mit der Entwässerungseinrichtung und der Unterlauf des Hydrozyklons bzw. der Hydrozyklone über eine mit Wärmetauschern und einer Dispersionseinspeisung versehene Leitung mit dem äußeren Mantelrohr eines länglichen, aufrechtstehenden Doppelrohrwärmetauschers verbunden ist, wobei der Auslaß des Doppelrohrwärmetauschers über eine weitere mit Wärmetauschern versehene Leitung mit einem schlangenförmigen, Mischschnecken aufweisenden Reaktor gekoppelt ist, dessen Auslaß in das untere innere Rohr des Doppelrohrwärmetauschers mündet, welches an seinem oberen Ende mit einer weiteren Entwässerungseinrichtung verbunden ist, wobei deren Abwurf in einem Trockner eingebunden ist, der das entstehende Pulver einem Sieb oder einer Mühle aufgibt.

Das erfindungsgemäße Verfahren muß seinen Merkmalen nach den vorgenannten Verfahren vom Typ "a" zugeordnet werden. Es unterscheidet sich jedoch deutlich von allen bereits in der Literatur beschriebenen Varianten.

Es wird ein rohrförmiger Reaktor verwendet, der ausschließlich unter hydrostatischem Druck steht.
Darin erfolgt die Umkristallisation kontinuierlich und vollständig während eines Durchlaufes, ohne daß unerwünschte Nebenprodukte wie Anhydrid entstehen oder nicht umgewandeltes Doppelhydrat zurückbleibt, das nachträglich beim Trocknen zu β-Haibhydrat umwandelt.

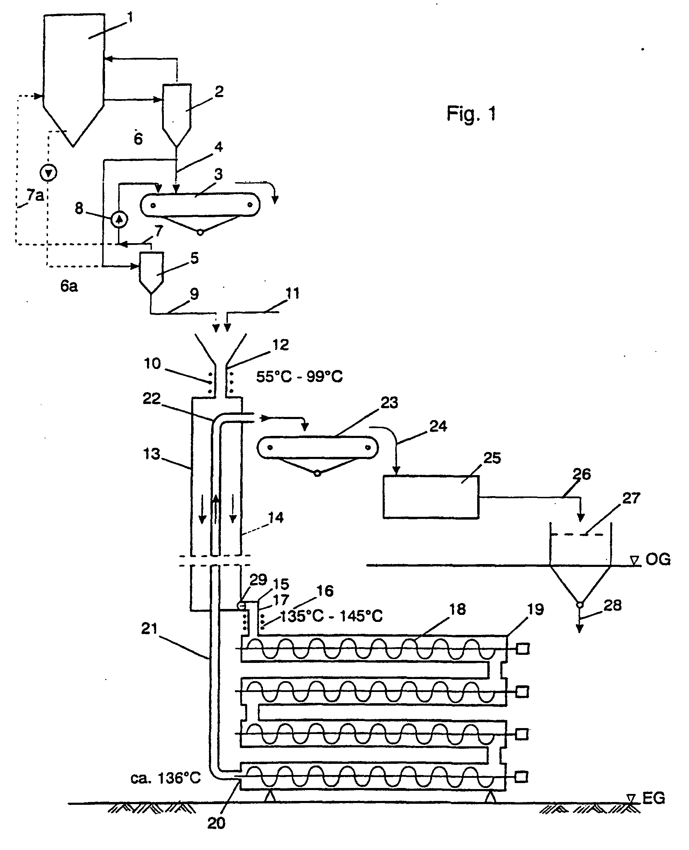

Die Erfindung soll nachstehend anhand eines Ausführungsbeispieles näher erläutert werden. Dabei zeigt Fig. 1 das Verfahrensschema.

Aus dem Sumpf der REA 1 wird Gipssuspension entnommen und über den Hydrozyklon 2 der Entwässerungseinrichtung zugeführt.
Von der zwischen dem Hydrozyklon 2 und der Entwässerungseinrichtung 3 angeordneten Verbindungsleitung 4 weicht die Abzweigleitung 6 ab, die in einen weiteren Hydrozyklon 5 mündet. Der Hydrozyklonoberlauf 7 ist über Pumpe 8 mit der Entwässerungseinrichtung 3 verbunden. Der Hydrozyklonunterlauf 9 führt die feststoffangereicherte Suspension in den Trichter der Leitung 12. In die Leitung 12 werden weiterhin Kristallisatoren und Keimbildner 11 eingegeben. Die Leitung 12 weist an ihrem Umfang Wärmetauscher 10 auf und mündet in das äußere Mantelrohr 13 des Doppelrohrwärmetauschers 14.
Am unteren Auslaß 15 des Doppelrohrwärmtauschers 14 befindet sich nach der Pumpe 29 die Leitung 17 mit Wärmetauscher 16.
Die Leitung 17 ist in den mit Mischschnecken 18 bestückten Reaktor 19 geführt, der schlangenförmig aufgebaut ist. Sein Auslaß 20 mündet in das innere Rohr 21 des Doppelrohrwärmetauschers 14, dessen oberes Ende 22 auf die Entwässerungseinrichtung 23 gerichtet ist. Der Abwurf 24 der Entwässerungseinrichtung 23 führt in den Trockner 25, in welchem das α-Halbhydrat zu Pulver 28 getrocknet und über das Sieb 27 in die Abfülleinrichtung 28 gegeben wird.

Es soll innerhalb der REA eines Braunkohlekraftwerkes aus den Rohrleitungen, mit denen die Gipssuspensionen zur Entwässerung auf die Bandfilter geführt wird, bei ca. 55 °C ein Teilstrom ausgeschleust werden. Dieser Teilstrom wird über einen Hydrozyklon, nötigenfalls mehrere hintereinandergeschaltete Zyklone, gepumpt.
Die Trennschärfe des Zyklons bzw. der Zyklonenkombination wird so eingestellt, daß im Zyklonenunterlauf nur noch mittel- bis großkömiges (< 30 µm) Doppelhydrat vorhanden ist.

Der Zyklonenoberlauf mit unerwünschten Feststoffteilchen wird in den REA-Kreislauf zurückgeführt.
Die so gereinigte Suspension wird im Durchlauf auf 99 °C erwärmt. Hierzu wird Rücklaufwasser aus dem Bandfilter mit ca. 90 - 95 °C mitverwendet. Anschließend wird der Suspension über Dosierungspumpen eine Dispersion mit Kristallisatoren und Keimbildnern zugeführt. Über erstere wird die Kornform über die zweiten die Korngröße des Endproduktes gesteuert.

Die so zur Umwandlung vorbereitete Suspension fließt in einem Doppelrohrwärmetauscher in den 20 - 22 Meter tiefer gelegenen Reaktor.

Aufgrund der Suspensionsdichte von (1,4 - 1,5) g/cm³ entsteht im Reaktor ein hydrostatischer Überdruck von 2,5 - 3,0 bar. Das erlaubt eine Reaktionstemperatur von 135 - 140 °C ohne Siedepunktüberschreitung.

Die ankommende Suspension verläßt den Doppelrohrwärmetauscher mit ca. 135 °C. Vor Eintritt in den Reaktor wird sie auf eine zu ermittelnde Temperatur von ca. 140 - 145 °C erwärmt, so daß sie bei Austritt und nach erfolgter Umwandlung noch 136 - 138 °C hat.

Die nunmehr α-halbhydrathaltige Suspension steigt dann im Innenrohr des Doppelrohrwärmetauschers wieder auf die in 22 Meter Höhe befindliche Ausgangsebene, wo sie mit 100 °C ankommt und auf den Bandfilter geleitet wird.

Die Bandfilteranlage wird allseitig wärmegedämmt eingehaust und ständig durch Zusatzheizung auf 95 °C gehalten.

Vom Bandfilter fällt das entwässerte α-Halbhydrat in einen bei (135 - 110)°C betriebenen Pulvertrockner. Dieser fördert das noch agglomerierte Pulver direkt auf ein Rührsieb, dessen Bürsten die Agglomerate zerstören.
Ein Mahlprozeß wird alternativ zur Erzeugung feinkörniger Endprodukte eingesetzt.
Angestrebtes Ziel ist eine mindestens 99 %-ige Umsetzung von Doppelhydrat zu α-Halbhydrat, wobei die Durchflußzeit durch den Reaktor nicht mehr als 30 Minuten betragen darf.
Die gesamte Anlage wird mit einem nicht dargestellten Sicherheitskreislauf aus gipsfreiem Wasser ausgerüstet.

Dieses erscheint nicht nur zum An- und Abfahren der Anlage notwendig, sondern vor allem auch um im Falle einer Betriebsstörung sofort die Gipssuspension ausspülen zu können.

Die vorliegende Erfindung zur Umwandlung von REA-Gips ist durch deutliche Vorteile gekennzeichnet:
1. Es wird durch Ausschleusung eines Teilstromes über Hydrozyklone aus dem REA-Kreislauf nur eine sehr enge und hochwertige bzw. fremdstofffreie Gipskornfraktion gewonnen.
2. Es entsteht ein α-Calciumsulfat-Halbhydrat, das für Anwendung in der gesamten bio-medizinischen Technik geeignet ist.
3. Die Gipsumwandlung erfolgt kontinuierlich und unmittelbar im Kraftwerksprozeß.
4. Es wird direkt mit der betriebswarmen Gipssuspension gearbeitet, ohne daß der Gips zuvor energieaufwendig entwässert, transportiert und am Bestimmungsort wieder suspendiert und aufgewärmt werden muß.
5. Bei der Raffination des Gipses entstehen keine Abfallstoffe, da der im Zyklonoberlauf abgezogene Gips hinreichende Qualität für anderweitige Verwertungen, z. B. zur Herstellung von Baustoffen besitzt.
6. Es erfolgt eine nahezu vollständige Wärmerückgewinnung derjenigen Wärmemengen, die zum Aufheizen auf Reaktionstemperatur nötig sind.
7. Die durch die Gebäudedimensionen im Kraftwerk möglichen Bauhöhen der Doppelrohrwärmetauscher ermöglichen Zuführung und Entnahme der Doppelhydratsuspension bzw. der Halhydratsuspension bei Normaldruck.
8. Es läßt sich durch Regelung der Strömungsverhältnisse im Reaktor ein globulitisches α-Halbhydratkron mit vorherbestimmbarer Korngröße erzielen.

Es lassen sich Gipsqualitäten für folgende Anwendungsfälle erzeugen:
- Zahntechnische Arbeitsmodelle aller Art
- Gipse für orthopädische und unfallchirurgische Zwecke
- Füllstoffe für Kosmetika und Arzneimittei
- Formen für die Porzellan- und Keramikherstellung

### Aufstellung der verwendeten Bezugszeichen

- 1: Rauchgasentschwefelungsanlage (REA)
- 2: Hydrozyklon
- 3: Entwässerungseinrichtung
- 4: Verbindungsleitung
- 5: Hydrozykion
- 6: Abzweigleitung vor Entwässerung
- 6a: Abzweigleitung direkt aus REA-Sumpf
- 7: Hydrozyklonoberlauf zur Entwässerung
- 7a: Hydrozyklonoberlauf zum REA-Sumpf
- 8: Pumpe
- 9: Hydrozyklonunterlauf
- 10: Wärmetauscher
- 11: Dispersionseinspeisung
- 12: Leitung
- 13: äußeres Mantelrohr
- 14: Doppelrohrwärmetauscher
- 15: Auslaß
- 16: Wärmetauscher
- 17: Leitung
- 18: Mischschnecken
- 19: Reaktor
- 20: Auslaß
- 21: inneres Rohr
- 22: oberes Ende
- 23: Entwässerungseinrichtung
- 24: Abwurf
- 25: Trockner
- 26: Pulver
- 27: Sieb oder Mühle
- 28: Abfülleinrichtung
- 29: Pumpe

## Patentansprüche

1. Verfahren zur Herstellung von α-Caleiumsulfat-Halbhydrat unter Verwendung der bei der nassen Rauchgasentschwefelung (REA) eines fossil gefeuerten Wärmekraftwerkes anfallenden Gipssuspension,
**gekennzeichnet dadurch,**
**daß** der aus der REA (1) entnommenen Gipssuspension vor ihrer Entwässerung ein Teilstrom entnommen, über einen oder mehrere Hydrozyklone (5) die Trennung der Feststoffanteile in Dihydrat und unerwünschte Bestandteile durchgeführt, die so gereinigte Suspension erwärmt, anschließend mit einer Dispersion aus Kristallisatoren und Keimbildnern (11) vermischt, über das äußere Rohr (13) eines länglichen, aufrechtstehenden Doppelrohrwärmetauschers (14) geführt sowie nach einer weiteren Erwärmung einem darunter befindlichen ggf. schlangenförmigen, Mischschnecken aufweisenden Reaktor (19) unter Ausnutzung des hydrostatischen Druckes aufgegeben und nachfolgend dem inneren Rohr (21) des Doppelrohrwärmetauschers (14) zugeführt wird, wobei nunmehr die entstandene α-Calciumsulfat-Halbhydrat-Suspension in diesem Innenrohr (21) zum Aufsteigen auf die Ausgangsebene (22) gebracht und nachfolgend entwässert sowie das entstehende Pulver getrocknet und gesiebt oder gemahlen wird.

2. Verfahren nach Anspruch 1, **gekennzeichnet dadurch, daß** eine hohe Reinheit durch Trennung in eine fremdstoffabgereicherte Fraktion von grob- und mittelkörnigem Dihydrat über den Zyklonunterlauf (9) und in eine fremdstoffangereicherte Gipsfraktion über den Zyklonoberlauf (7) erfolgt.

3. Verfahren nach Anspruch 2, **gekennzeichnet dadurch, daß** die über den Oberlauf (7) ausgeschleusten die Fremdstoffe enthaltende Gipsfraktion zur Entwässerung (3) und/oder in den Wasserkreislauf der REA (7a) rückgeleitet werden.

4. Verfahren nach Anspruch 1, **gekennzeichnet dadurch, daß** die Erwärmung der gereinigten Suspension durch Nutzung des dem Rücklaufwasser der Gipsentwässerung (bei ca. 90 - 95 °C) innewohnenden Wärmeinhaltes durchgeführt wird.

5. Anordnung zur Herstellung von α-Calciumsulfat-Halbhydrat unter Verwendung des bei der nassen Rauchgasentschwefelung (REA) eines fossil gefeuerten Wärmekraftwerkes als Suspension anfallenden Gipses,
**gekennzeichnet dadurch,**
**daß** aus der Verbindungsleitung (4) zwischen einem der REA (1) nachgeschalteten Hydrozyklon (2) und einer Entwässerungseinrichtung (3) eine mit einem weiteren Hydrozykion (5) verbundene Abzweigieitung (6) angebunden ist, wobei der Oberlauf (7) des Hydrozyklons (5) über eine Pumpe (8) mit der Entwässerungseinrichtung (3) und der Unterlauf (9) des Hydrozyklons (5) über eine mit Wärmetauschern (10) und einer Dispersionseinspeisung (11) versehene Leitung (12) mit dem äußeren Mantelrohr (13) eines länglichen, aufrechtstehenden Doppelrohrwärmetauschers (14) verbunden ist, wobei der Auslaß (15) des Doppelrohrwärmetauschers (14) über eine weitere mit Wärmetauschern (16) versehene Leitung (17) mit einem schlangenförmigen, Mischschnecken (18) aufweisenden Reaktor (19) gekoppelt ist, dessen Auslaß (20) in das untere innere Rohr (21) des Doppelrohrwärmetauschers (14) mündet, welches an seinem oberen Ende (22) mit einer Entwässerungseinrichtung (23) verbunden ist, wobei deren Abwurf (24) in einem Trockner (25) eingebunden ist, der das entstehende Pulver (26) einem Sieb oder einer Mühle (27) aufgibt.

6. Anordnung nach Anspruch 5, **gekennzeichnet dadurch, daß** in der Abzweigleitung (6; 6a) eine Pumpe angeordnet ist.

7. Anordnung nach Anspruch 5, **gekennzeichnet dadurch, daß** das äußere Rohr (13) des Doppelrohrwärmetauschers (14) an seinem unteren Ende eine Pumpe aufweist.

8. Anordnung nach Anspruch 5, **gekennzeichnet dadurch, daß** die Wärmetauscher (14; 16) gemeinsam eine Bauhöhe haben, die ausreicht, im Reaktor (19) einen hydrostatischen Druck zu erzeugen, der größer ist als der Wasserdampfdruck bei einer Reaktionstemperatur von 105 bis 165 °C.

## Claims

1. Process to produce α-calcium sulphate hemi-hydrate from the gypsum suspension arising in connection with wet flue-gas desulphurisation (FGD) of a fossil-fuel thermal power station,
**characterised by the fact**
that before the gypsum suspension extracted from the FGD (*1*) is dewatered, a partial current is taken, conducted through one or more hydro-cyclones (*5*) to separate the solids content into dehydrate and unwanted constituents, after which the suspension purified in this manner is heated, then mixed with a dispersion of crystallisers and nucleating agents (*11*), conducted through the outer pipe (*13*) of a longish upright double-pipe heat exchanger (*14*), where it is once again heated and fed by hydrostatic pressure into a reactor (*19*), possibly fitted with coil-shaped mixing screws, after which it is fed into the subsequent inner pipe (*21*) of the double-pipe heat exchanger (*14*) where the resulting α-calcium sulphate hemi-hydrate suspension in this inner pipe (*21*) rises to the initial level (*22*) and is then subsequently dewatered, with the resulting powder being dried and sifted or ground.

2. Process according to Claim 1, **characterised by** the fact that a high purity is achieved by separation into a foreign-matter-enriched fraction of coarse and medium-grain dehydrates by way of the cyclone underflow (9) and into a foreign-matter-enriched gypsum fraction by way of the cyclone overflow (7).

3. Process according to Claim 2, **characterised by** the fact that the gypsum fraction containing the foreign matter, discharged by way of the overflow (7), is returned for dewatering (3) and/or returned to the water circuit of the FGD (7a).

4. Process according to Claim 1, **characterised by** the fact that the purified suspension is heated by using the inherent heat in the returned water of gypsum dewatering (at approx. 90 - 95 °C).

5. Layout to produce α-calcium sulphate hemi-hydrate from the gypsum arising in connection with wet flue-gas desulphurisation (FGD) of a fossil-fuel thermal power station,
**characterised by** the fact
that the connecting pipe (4) between the hydro-cyclone (2) that follows the FGD (*1*) and a dewatering installation (3) connected to a branch line (6) that is linked to another hydro-cyclone (5), where the overflow (7) of the hydro-cyclone (5) is connected by way of a pump (*8*) to the dewatering installation (*3*), and the underflow (*9*) of the hydro-cyclone (*5*) is connected - by way of heat exchangers (*10*) and a dispersion feeder (*11*) equipped with a pipe (*12*) - to the outer jacket pipe (*13*) of a longish upright double-pipe heat exchanger (*14*) where the outlet (*15*) of the double-pipe heater exchanger (*14*) is connected by way of the pipe (*17*) of further heat exchangers (*16*) to a reactor (19) fitted with coil-shaped mixing screws (*18*), and to an outlet (*20*) that leads into the lower inner pipe (*21*) of the double-pipe heat exchanger (*14*) which, at its top end (*22*), is connected to a dewatering installation (*23*) with a discharge (*24*) that is integrated into a drier (*25*) that feeds the resulting powder (*26*) onto a screen or into a mill (*27*).

6. Layout according to Claim 5, **characterised by** the fact that a pump is located within the branch line (*6*; *6a*).

7. Layout according to Claim 5, **characterised by** the fact that the outer pipe (*13*) of the double-pipe heat exchanger (*14*) features a pump at its lower end.

8. Layout according to Claim 5, **characterised by** the fact that the heat exchangers (*14*; *16*) are of the same overall height sufficient to generate a hydrostatic pressure inside the reactor (*19*) that is higher than the water vapour pressure at a reaction temperature of 105 to 165 °C.

## Revendications

1. Procédé de fabrication d'un semi-hydrate sulfate de calcium a en utilisant la suspension de sulfate de calcium bihydraté résultant de la désulfuration par voie humide des gaz de fumée d'une centrale thermique brûlant des énergies fossiles
**caractérisé en ce qu'**
on retire un courant partiel de la suspension de sulfate de calcium bihydraté provenant de la désulfuration des gaz de fumée (1) avant sa déshydratation, on sépare la teneur en matières solides en dihydrate et éléments indésirables via un ou plusieurs hydrocyclones (5), on chauffe la suspension ainsi purifiée, on la mélange ensuite à une dispersion composée de cristallisateurs et de substances qui forment des germes (11), on la fait passer sur le tube extérieur (13) d'un échangeur thermique à tubes jumelés (14) oblong et posé à la verticale, on la donne après un autre chauffage à un réacteur (19) placé en-dessous, le cas échéant serpentin et présentant des vis mélangeuses en utilisant la pression hydrostatique et on l'amène ensuite au tube intérieur (21) de l'échangeur thermique à tubes jumelés (14), la suspension de semi-hydrate sulfate de calcium α produite étant à présent amenée au niveau de la sortie (22) dans ce tube intérieur (21) pour qu'elle monte, on la déshydrate ensuite et on sèche, tamise ou broie la poudre ainsi produite.

2. Procédé selon la revendication 1, **caractérisé en ce qu'** il en résulte une grande pureté grâce à la séparation en une fraction appauvrie en matière étrangère de dihydrate à gros grains et à grains moyens via le soutirage de pointe de cyclone (9) et en une fraction de sulfate de calcium bihydraté enrichie en matière étrangère via la surverse de cyclone (7).

3. Procédé selon la revendication 2, **caractérisé en ce que** la fraction de sulfate de calcium bihydraté contenant des matières étrangères et éclusée au dehors via la surverse de cyclone (7) est renvoyée en vue d'une
déshydratation (3) et/ou dans le cycle de l'eau de la désulfuration des gaz de fumée (7a).

4. Procédé selon la revendication 1, **caractérisé en ce que** le chauffage de la suspension purifiée est réalisé par l'utilisation de la capacité calorifique inhérente aux eaux de recyclage de la déshydratation du sulfate de calcium bihydraté (environ 90 à 95 °C).

5. Disposition de fabrication d'un semi-hydrate sulfate de calcium α en utilisant le sulfate de calcium bihydraté sous forme de suspension résultant de la désulfuration par voie humide des gaz de fumée d'une centrale thermique brûlant des énergies fossiles
**caractérisée en ce qu**' une conduite de dérivation (6) reliée à un autre hydrocyclone (5) provenant de la ligne de raccordement (4) entre l'hydrocyclone (2) connecté en aval de la désulfuration des gaz de fumée (1) et une installation de déshydratation (3), la surverse (7) de l'hydrocyclone (5) étant reliée à l'installation de déshydratation (3) via une pompe (8) et le soutirage de pointe (9) de l'hydrocyclone (5) étant relié au tube de protection extérieur (13) d'un échangeur thermique à tubes jumelés (14) oblong et posé à la verticale via une conduite (12) pourvue d'échangeurs thermiques (10) et d'une alimentation en dispersion (11), la sortie (15) de l'échangeur thermique à tubes jumelés (14) est couplée à un réacteur (19) serpentin et présentant des vis mélangeuses (18) via une autre conduite (17) pourvue d'échangeurs thermiques (16), la sortie du réacteur (20) se jetant dans le tube intérieur inférieur (21) de l'échangeur thermique à tubes jumelés (14), relié à son extrémité supérieure (22) à une installation de déshydratation (23), son déversement (24) étant intégré à un séchoir (25), qui fait tomber la poudre produite (26) dans un crible ou un broyeur (27).

6. Disposition selon la revendication 5, **caractérisée en ce qu'**une pompe est disposée dans la conduite de dérivation (6 ; 6a).

7. Disposition selon la revendication 5, **caractérisée en ce que** le tube extérieur (13) de l'échangeur thermique à tubes jumelés (14) présente une pompe à son extrémité inférieure.

8. Disposition selon la revendication 5, **caractérisée en ce que** les échangeurs thermiques (14 ; 16) ont ensemble un encombrement en hauteur qui suffit à produire une pression hydrostatique dans le réacteur (19) supérieure à la pression de la vapeur d'eau à une température de réaction comprise entre 105 et 165 °C.
